# EUROPÄISCHE PATENTSCHRIFT

(11) **EP 3 168 496 B1**
(45) Veröffentlichungstag und Bekanntmachung des Hinweises auf die Patenterteilung: **20.03.2019**
(21) Anmeldenummer: 16198496.8
(22) Anmeldetag: 11.11.2016
(51) Int. Cl.: F16H 25/06, F16H 49/00, F16H 19/04, F16H 25/12

(54) **GETRIEBE UND HERSTELLUNGSVERFAHREN FÜR EIN GETRIEBE**
GEARBOX AND METHOD FOR PRODUCING SUCH A GEARBOX
ENGRENAGE ET METHODE POUR PRODUIRE UN TEL ENGRENAGE

(30) Priorität: 12.11.2015 DE 102015119582
(43) Veröffentlichungstag der Anmeldung: 17.05.2017
(73) Patentinhaber: WITTENSTEIN SE, 97999 Igersheim (DE)
(72) Erfinder: Dorner, Wilhelm, 97273 Kürnach (DE); Lesch, Michael, 97232 Giebelstadt (DE); Kümmeth, Andreas, 97199 Ochsenfurt (DE); Michel, Frank, 33034 Brakel (DE); Schreiber, Heiko, 02692 Doberschau (DE); Wilhelm, Thomas, 97993 Creglingen (DE)
(74) Vertreter: Zimmermann & Partner Patentanwälte mbB

(56) Entgegenhaltungen:
- EP-A1- 0 201 730
- WO-A1-98/04849
- DE-A1-102007 011 175
- DE-A1-102007 016 189
- DE-A1-102007 020 415
- DE-C- 341 053
- GB-A- 400 282

## Beschreibung

### Gebiet der Erfindung

Die Erfindung betrifft ein Getriebe und ein Verfahren zum Herstellen eines Getriebes.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in eine Verzahnung ein, sodass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht.

Für manche Anwendungen kommt es bei bekannten Getrieben, wie sie in der genannten Anmeldeschrift beschrieben sind, jedoch unter Umständen auf den Platzbedarf des Getriebes an.

GB 400 282 A offenbart die Merkmale des Oberbegriffes des Anspruchs 1.

### Offenbarung der Erfindung

Aufgabe der Erfindung ist es, Getriebe anzugeben, welche gegenüber aus dem Stand der Technik bekannten Getrieben verbessert sind, wobei insbesondere ein Getriebe für geringes Platzangebot und ein Herstellverfahren für ein entsprechendes Getriebe von Interesse sind.

Die Aufgabe wird mit einem Getriebe nach dem Anspruch 1 und einem Verfahren zum Herstellen eines Getriebes nach dem nebengeordneten Anspruch gelöst. Vorteilhafte Weiterbildungen und Ausführungsformen ergeben sich aus den Unteransprüchen und aus dieser Beschreibung.

Ein Aspekt der Erfindung betrifft ein Getriebe, insbesondere Koaxialgetriebe oder Lineargetriebe, mit einer Verzahnung, einem Zahnträger mit radial ausgerichteten Führungen, Zähnen, welche in den Führungen zum Eingriff mit der Verzahnung aufgenommen sind, wobei die Zähne in den Führungen in Richtung ihrer Längsachse relativ zu dem Zahnträger radial verschieblich gelagert sind, einer Kurvenscheibe zum radialen Antrieb der Zähne, wobei der Zahnträger ein erstes Zahnträgerteil und ein zweites Zahnträgerteil umfasst.

Ein weiterer Aspekt der Erfindung betrifft ein Herstellungsverfahren für ein Getriebe in einer der hierin beschriebenen typischen Ausführungsformen.

Ausführungsformen der Erfindung betreffen insbesondere Koaxialgetriebe. Üblicherweise umfassen Getriebe der Erfindung eine innenliegende Kurvenscheibe als Antriebselement und ein Hohlrad mit einer innenliegenden Verzahnung oder ein außenliegendes Antriebselement mit innerer Profilierung und ein innenliegendes Zahnrad oder eine innenliegende Zahnstange, welche für den Fall des außenliegenden Antriebselementes die Verzahnung stellt. Konfigurationen von Ausführungsformen betreffen Lineargetriebe zur Umsetzung einer Rotation in eine Linearbewegung. Der Ausdruck "Kurvenscheibe" ist typischerweise allgemein dahingehend zu verstehen, dass das entsprechende Bauteil nicht zwingend einer Scheibe ähneln muss. Vielmehr kann die Kurvenscheibe auch Teil einer Antriebswelle sein oder eine längliche Ausdehnung, insbesondere mit mehreren Abschnitten, aufweisen. Einer oder mehrere solcher Abschnitte können einen sich veränderlichen Radius aufweisen, so dass die Funktion einer Kurvenscheibe erfüllt ist. Weitere Abschnitte können andere Funktionen aufweisen und beispielsweise zylinderförmig sein oder auch mit Kanten, z.B. zur Drehmomentübertragung, versehen sein. Typischerweise bezieht sich der Ausdruck Kurvenscheibe primär auf die Funktion dieses Bauteils, nämlich eine umlaufende Profilierung bereitzustellen, um beispielsweise je nach Winkellage der Antriebswelle und damit der Kurvenscheibe die Zähne in radialer Richtung anzutreiben oder ein Zurückgleiten der Zähne in den Führungen zuzulassen.

Die Verzahnung ist typischerweise eine umlaufende Verzahnung. In die Verzahnung greifen die Zähne oder die Zahnköpfe der Zähne ein, wobei die Zähne typischerweise linear radial verschieblich relativ zu dem Zahnträger gelagert sind. Dabei bedeutet "linear radial" üblicherweise, dass eine Führung in radialer Richtung vorliegt, welche lediglich eine Bewegung des Zahnes in radialer Richtung zulässt. Typischerweise lässt sich durch die Führung ein Zahn in genau einer Richtung linear verschieben, dies kann beispielsweise dadurch erreicht werden, dass der Zahn über eine bestimmte Streckenlänge einen gleichbleibenden Querschnitt in Verschieberichtung aufweist, wobei der Zahnträger ebenfalls eine Öffnung für den Zahn mit gleichbleibendem Querschnitt aufweist. Üblicherweise sind die Zähne in dem Zahnträger jeweils in genau einer Richtung verschieblich gelagert, typischerweise in Richtung der Längsachse des Zahnes. Weiterhin ist bei typischen Ausführungsformen der Rotationsfreiheitsgrad der Zähne relativ zu dem Zahnträger um die Längsachse des Getriebes gesperrt. Dies kann beispielweise mit einer linearen Führung der Zähne in radialer Richtung in dem Zahnträger erreicht werden. Auf diese Weise drehen sich die Zähne mit dem Zahnträger um die Längsachse des Getriebes, allerdings nicht relativ zu dem Zahnträger.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe aus Kunststoff bieten den Vorteil, dass sie ein geringes Gewicht aufweisen. Mit dem Ausdruck "biegesteif" ist insbesondere eine Biegesteifigkeit um eine Querachse des Zahnsegments gemeint. Dies bedeutet insbesondere, dass bei einer Ansicht des Zahnes als Balken von einem Zahnfuß zu einem Zahnkopf eine Biegesteifigkeit vorliegt, welche Biegeverformungen zwischen Zahnkopf und Zahnfuß zumindest im Wesentlichen ausschließt. Durch die Biegesteifigkeit wird eine extrem hohe Belastbarkeit und Verdrehsteifigkeit des Getriebes erreicht.

Bei typischen Ausführungsformen ist zwischen dem Zahn und der Kurvenscheibe ein Schwenksegment angeordnet, welches auf einer Wälzlagerung gelagert ist, welche wiederum auf der Kurvenscheibe aufliegt. Vorteilhafte Ausführungsformen umfassen ein Schwenksegment, welches zwischen der Kurvenscheibe und jeweils mindestens einem Zahn angeordnet ist. Das Schwenksegment ermöglicht eine Verkippung des Zahnes relativ zu der Oberfläche der Kurvenscheibe oder relativ zu dem Schwenksegment. Typischerweise sind auf einem Schwenksegment genau ein Zahn, insbesondere genau ein Flachzahn oder genau in Rundzahn, oder zwei Zähne oder mehr als zwei Zähne gelagert. Mehrere auf einem Schwenksegment gelagerte Zähne sind typischerweise in einer Reihe in axialer Richtung nebeneinander angeordnet. Ein Flachzahn ist typischerweise mit seiner längeren Querausdehnung in Richtung der Längsachse des Getriebes ausgerichtet.

Typischerweise sind die Zähne jeweils lose mit den jeweiligen Schwenksegmenten verbunden. Bevorzugte Schwenksegmente umfassen ein Profil, welches ein Abrutschen des Zahnes von dem Schwenksegment oder ein Verrutschen des Schwenksegments zumindest in einer Richtung verhindert. Es sollte berücksichtigt werden, dass die Schwenksegmente auf diese Weise durch die geführten Zähne in ihrer Lage in Umlaufrichtung relativ zu dem Zahnträger gehalten werden. Ein solches Profil kann beispielsweise ein Wulst sein, welcher in eine Vertiefung eingreift. Das Schwenksegment kann einen Wulst oder eine Vertiefung aufweisen.

Die Schwenksegmente weisen vorzugsweise einander zugewandte Kanten mit Erhebungen und Vertiefungen auf, beispielsweise eine Wellenform oder eine gezackte Form. Dies bietet den Vorteil, dass Nadelrollen, welche unterhalb der Schwenksegmente angeordnet sind, auch bei einem größeren Abstand zwischen den Schwenksegmenten zuverlässig in dem Raum zwischen den Schwenksegmenten und dem Antriebselement gehalten werden.

Typische Ausführungsformen der Erfindung umfassen eine Kurvenscheibe als Antriebselement. Die Kurvenscheibe weist vorzugsweise eine nicht-kreisförmige oder eine nicht-ellipsoide Bogenform oder Kurve auf. Die nicht-kreisförmige oder nicht-ellipsoide Bogenform bietet den Vorteil, dass verschiedene Kurven verwendet werden können, um beispielsweise unterschiedliche Übersetzungsverhältnisse einzustellen. Im Sinne dieser Anmeldung fallen Exzenter ebenfalls unter kreisförmige oder ellipsoide Formen, da bei Exzentern lediglich die Drehachse nicht der Mittelachse der Kreisform entspricht, gleichwohl jedoch eine Kreisform vorhanden ist. Typische Kurvenscheiben umfassen zumindest oder genau zwei Erhebungen, welche typischerweise gleichverteilt über den Umfang angeordnet sind. Die Erhebungen können auch als Maxima bezeichnet werden. Mehrere Erhebungen bringen mehr Zähne in Eingriff mit der Verzahnung oder Innenverzahnung.

Bei typischen Ausführungsformen sind der Zahnträger oder die Verzahnung kreisförmig ausgebildet. Dies bietet den Vorteil einer einfachen Geometrie für den Zahnträger und die Verzahnung. Typischerweise erfolgt die Kraftübertragung auf der langsamen Seite des Getriebes zwischen der Verzahnung und dem Zahnträger. Dies bietet den Vorteil, dass der Weg für die Kraftübertragung äußerst kurz ist, sodass eine äußerst hohe Steifigkeit erreicht werden kann. Ausführungsformen, welche diese Bedingungen erfüllen, sind in einer nicht abschließenden Ausführung: Getriebe mit innenliegender Kurvenscheibe als Antrieb und außenliegendem Hohlrad mit Verzahnung, wobei der Zahnträger zwischen Hohlrad und Kurvenscheibe angeordnet ist; außenliegende Kurvenscheibe mit innenliegender Profilierung an einem Hohlrad zum Antrieb der radial beweglichen Zähne nach innen gegen eine Verzahnung, welche auf einem Zahnrad oder einer Zahnstange angeordnet ist.

Die Verzahnung und die Zähne weisen typischerweise gekrümmte Flanken auf. Beispiele für Krümmungen der Flanken sind eine zylinderförmige Krümmung oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht.

Typische Ausführungsformen umfassen einen Zahnträger mit einem ersten Zahnträgerteil und einem zweiten Zahnträgerteil. Auf diese Wiese wird eine Montage eines Getriebes mit integrierten Lagern ermöglicht. Typischerweise ist der Zahnträger asymmetrisch geteilt. Weitere Ausführungsformen umfassen Zahnträger mit symmetrischer Teilung. Ausführungsformen können dritte und gegebenenfalls auch weitere Zahnträgerteile umfassen. Typische Zahnträger sind in einer Axialebene geteilt. Typischerweise ist eine Axialebene eine Ebene, welche senkrecht zu der Drehachse des Getriebes steht. Ausführungsformen weisen eine Grenzfläche oder Fügefläche zwischen den Zahnträgerteilen auf, welche glatt ist oder welche abgestuft ist oder welche Erhöhung und/oder Vertiefungen aufweist, beispielsweise um eine definierte Lagerelation zwischen den Zahnträgerteilen zu schaffen.

Typische Ausführungsformen umfassen zumindest ein integriertes Lager. Integrierte Lager sind typischerweise Lager, welche nicht über einen eigenen Lagerring verfügen. Typische integrierte Lager nutzen Bauteiloberflächen als Lagerflächen. Auf diese Weise kann Platz gespart werden. Insbesondere eine Ausdehnung des Getriebes in axialer oder radialer Richtung kann dadurch verringert werden. Typische Getriebe können die folgenden Vorteile aufweisen: eine Wellenmutter kann entfallen; es kann ein besserer Rundlauf aufgrund kürzerer Toleranzkette erreicht werden und/oder ein Montageaufwand kann minimiert werden.

Typischerweise sind das erste Zahnträgerteil und das zweite Zahnträgerteil durch ein Verbindungsmittel verbunden sind. Typische Verbindungsmittel umfassen Bolzen, Nieten und Schrauben. Bei typischen Ausführungsformen sind beispielsweise Lochkreise, Sacklochbohrungen oder Kombinationen davon in den Zahnträgerteilen vorhanden. Dies ermöglicht eine sichere und genaue Montage. Bei typischen Ausführungsformen sind die Zahnträgerteile mit Konturen, beispielsweise Nasen, Nuten, Sacklochbohrungen oder Stiften versehen, so dass sie nur in exakt einer Winkelposition gefügt werden können. Typische Ausführungsformen umfassen Markierungen um eine Montage in einer bestimmten Winkelposition sicher zu stellen.

Bei typischen Ausführungsformen umfasst das erste Zahnträgerteil zumindest zwei in axialer Richtung parallel angeordnete, umlaufende Reihen von Führungen. Typische Ausführungsformen umfassen zumindest zwei umlaufende Reihen von Zähnen. Eine Mehrzahl von Reihen bietet mehr Kraftangriffsfläche und außerdem bieten mindestens zwei Reihen Stabilität für die Schwenksegmente gegenüber Drehungen beispielsweise um eine radiale Achse. Typischerweise sind alle Führungen in dem ersten Zahnträgerteil angeordnet und/oder das zweite Zahnträgerteil ist frei von Führungen.

Typischerweise ist zwischen einem Gehäuse des Getriebes und dem Zahnträger zumindest ein Lager mit Wälzkörpern angeordnet ist, wobei die Wälzkörper unmittelbar auf einer Zahnträgerlagerfläche des Zahnträgers und/oder einer Gehäuselagerfläche des Gehäuses aufliegen. Typischerweise ist die Zahnträgerlagerfläche einteilig mit dem Zahnträger oder dem Gehäuse ausgebildet. Eine unmittelbare Lagerung wird auch als integrierte Lagerung verstanden. Sie bietet den Effekt eines geringen Bauraums. Typische Wälzkörper umfassen Rollen, Kugeln und Kegel. Bei typischen Ausführungsformen wird eine insbesondere angestellte Rollenlagerung verwendet, welche beispielsweise als Schrägrollenlager oder Kegelrollenlager ausgeführt ist. Die Wälzkörper sind typischerweise in einem Käfig angeordnet oder weisen Abstandshalter auf. Weitere Ausführungsformen umfassen frei umlaufende Wälzkörper.

Typischerweise nimmt die Zahnträgerlagerfläche und/oder die Gehäuselagerfläche und/oder eine Drehachse der Wälzkörper gegenüber der Längsachse des Getriebes einen Winkel von mindestens 10°, mindestens 35° oder mindestens 45° und/oder höchstens 60°, höchstens 80° oder höchstens 75° ein. Winkel von etwa 45° oder zwischen 40° und 50° eignen sich besonders für axiale, radiale und Kippmoment-Belastungen. Ausführungen mit 55° bis 65° oder etwa 60° eignen sich für überwiegende Axialbelastungen und Kippmoment-Belastungen.

Typische Getriebe von Ausführungsformen umfassen eine Verzahnung, welche integral mit dem Gehäuse ausgebildet ist. Dies kann Bauraumvorteile ergeben. Bei weiteren Ausführungsformen ist eine Verzahnung, beispielsweise ein Hohlrad, in dem Gehäuse angeordnet.

Typische Ausführungsformen umfassen zwischen der Kurvenscheibe und den Zähnen eine Lagerung mit Schwenksegmenten und Segmentlagerkörpern. Typischerweise sind mindestens zwei axial parallel liegende Zähne pro Schwenksegment vorgesehen. Auf diese Weise kann das Schwenksegment in seiner Laufbahn stabilisiert werden. Typische Ausführungsformen umfassen ein oder mindestens zwei axial nebeneinander angeordnete Segmentlagerkörperreihen pro umlaufender Reihe Schwenksegmente. Ein Schwenksegment kann auf mindestens zwei parallel umlaufenden Segmentlagerkörperreihen gelagert sein. Dabei können bei zwei oder mehr parallel angeordneten Reihen von Zähnen jeweils eine Segmentlagerkörperreihe unter einer Zahnreihe angeordnet sein, so dass das Schwenksegment unter jeweils einer Zahnreihe eine Unterstützung erfährt.

Typische Zahnträger von Ausführungsformen umfassen zumindest einen sich radial nach innen oder radial nach außen erstreckenden Anlaufflansch, welcher die Schwenksegmente zumindest teilweise in radialer Richtung übergreift. Auf diese Weise besteht die Option, auf zusätzliche Anlaufscheiben zu verzichten. Der Anlaufflansch kann integral mit dem Zahnträger ausgeführt sein oder an dem Zahnträger befestigt sein. Typische Ausführungsformen weisen keine Anlaufscheibe auf. Einige Ausführungsformen umfassen eine Anlaufscheibe zumindest einseitig axial neben den Segmentlagerkörpern zur Führung der Schwenksegmente. Typische Segmentlagerkörper sind als Nadelrollen oder Kugeln ausgeführt.

Bei Ausführungsformen mit Anlaufflansch an dem Zahnträger umfasst typischerweise zumindest einer der Anlaufflansche eine Abtriebslagerfläche, welche unmittelbar mit Abtriebslagerwälzkörpern zusammenwirkt. Bei weiteren Ausführungsformen, insbesondere Ausführungsformen mit einer separaten Anlaufscheibe für die Schwenksegmente umfasst der Zahnträger typischerweise zumindest einen Flansch, welcher eine Abtriebslagerfläche umfasst. Ein solcher Flansch kann analog zu einem Anlaufflansch aufgebaut sein weist jedoch nicht dieselbe Funktion auf, bspw. da eine separate Anlaufscheibe vorhanden ist. Typischerweise ist ein Lager zwischen Zahnträger und der Kurvenscheibe oder einer mit der Kurvenscheibe verbundenen Welle integral ausgeführt. Solche Ausführungsformen können platzsparend sein. Typischerweise sind die Abtriebslagerwälzkörper unmittelbar auf der Kurvenscheibe gelagert. Bei weiteren Ausführungsformen ist zwischen Zahnträger und Kurvenscheibe ein Lager mit Lagerringen vorgesehen. Dies kann die Herstellung vereinfachen. Die Abtriebslagerwälzkörper sind typischerweise als Nadelrollen oder Kugeln ausgeführt.

Typische Getriebe umfassen eine Mehrzahl von Schwenksegmenten, welche umlaufend auf Segmentlagerkörpern angeordnet sind und jeweils mit einer Wälzlagerfläche auf den Segmentlagerkörpern aufliegen. Die Segmentlagerkörper sind typischerweise auf der Kurvenscheibe gelagert. Die Segmentlagerkörper verringern den Reibungswiderstand. Weitere Ausführungsformen umfassen eine Gleitlagerung zwischen den Schwenksegmenten und der Kurvenscheibe.

Typischerweise ist an den Schwenksegmenten in axialer Richtung beidseitig jeweils eine Bordlagerfläche angeordnet, wobei die zwei Bordlagerflächen eines Schwenksegmentes zumindest teilweise auf Borden der Kurvenscheibe aufliegen. Auf diese Weise kann ein Verkippen der Schwenksegmente verhindert werden und ein ruhiger Lauf sichergestellt werden.

Typische Herstellverfahren der Erfindung umfassen ein Verbinden des ersten Zahnträgerteils und des zweiten Zahnträgerteils mittels Verbindungsmitteln. Typischerweise werden die Zahnträgerteile in einer Aufspannung bearbeitet. Typische Bearbeitungsvorgänge, welche in einer Aufspannung durchgeführt werden, sind beispielsweise das Herstellen von Zahnträger-Lagerflächen an dem Zahnträger, insbesondere für integrierte Lager, oder das Herstellen der Führungen für die Zähne. Hierzu kann ein Härten der Zahnträger-Lagerflächen, Bohren, Reiben und/oder Honen und/oder Glätten der Führungen, Drehen der Zahnträger-Lagerflächen und/oder Schleifen der Zahnträger-Lagerflächen gehören. Während der Bearbeitung in einer Aufspannung können die Zahnträgerteile durch die Verbindungsmittel verbunden sein oder anderweitig zusätzlich oder ausschließlich relativ zueinander fixiert sein, beispielsweise mit Klemmen. Das erste Zahnträgerteil und/oder das zweite Zahnträgerteil können bei Ausführungsformen nur teilweise, bspw. an den Zahnträger-Lagerflächen bearbeitet werden.

Typischerweise werden die Verzahnung und die Gehäuselagerflächen in einer Aufspannung bearbeitet, insbesondere bei Verzahnungen, welche integral mit dem Gehäuse ausgeführt sind, jedoch typischerweise auch bei an dem Gehäuse befestigter Verzahnung. Auf diese Weise wird eine hohe Präzision erreicht. Typischerweise werden dabei folgende Bearbeitungsvorgänge in einer Aufspannung bearbeitet: Härten, Erodieren, Wälzschälen, Räumen, Honen, Schleifen und/oder Glätten der Verzahnung und/oder Drehen, Glätten und/oder Schleifen der Lagerlaufflächen. Bei typischen Verfahren zur Herstellung können Abmaße von bereits gefertigten Teilen, wie beispielsweise Zahnträgerteile oder Verzahnung oder Kurvenscheibe, genommen werden, um mit einer entsprechenden Fertigung der übrigen Teile einen Ausgleich zu erreichen.

Im Rahmen einer integralen Lagerung von Ausführungsformen übrig gebliebene Maßtoleranzen bezüglich der Lagerlaufbahnen können durch Selektion von Bauteilen ausgeglichen werden. Bei weiteren Ausführungsformen wird keine Selektion vorgenommen.

Vorteile typischer Ausführungsformen sind unter anderem ein geringer Platzbedarf, geringe Kosten, ein geringer Montageaufwand und/oder eine Verbesserung des Rundlaufs.

### Kurze Beschreibung der Zeichnung

Nachfolgend wird die Erfindung anhand der beiliegenden Zeichnung näher erläutert, wobei die Figur zeigt:

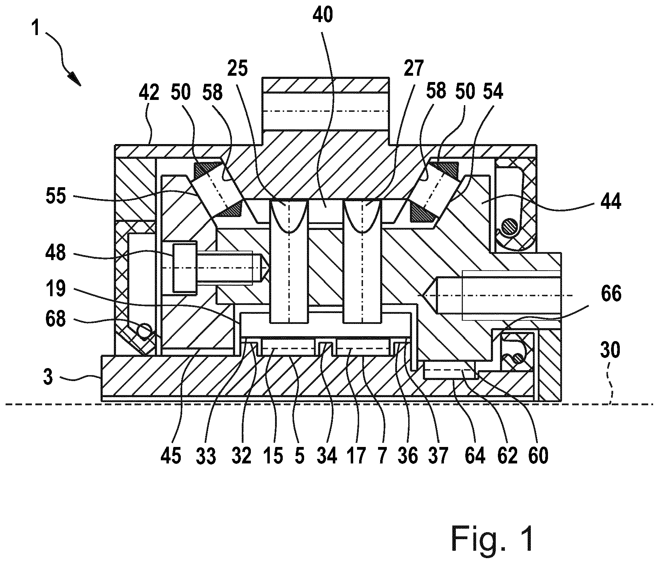

- Fig. 1: zeigt schematisch eine erste Ausführungsform der Erfindung in einem Ausschnitt eines Längsschnitts durch ein Getriebe.

### Beschreibung von Ausführungsbeispielen

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind.

In der Fig. 1 ist eine typische Ausführungsform eines erfindungsgemäßen Getriebes 1 in einem Ausschnitt einer Schnittansicht gezeigt. Für weitere Erläuterungen zur Funktionsweise des Getriebes und für weitere technische Merkmale wird beispielsweise auf die DE 10 2007 011 175 A1 verwiesen.

Das Getriebe 1 umfasst eine Kurvenscheibe 3, welche integral mit einer Antriebswelle ausgeführt ist und dadurch eine, in axialer Richtung, längliche Gestalt aufweist. Die Kurvenscheibe 3 umfasst zwei Profilierungen, welche auch als Laufbahnen oder Schwenklagerlaufbahnen bezeichnet werden können. Diese Profilierungen 5 und 7 weisen einen sich über den Umfang verändernden Radius auf, insbesondere weisen sie jeweils zwei Maxima, welche auch als Erhebungen bezeichnet werden können, und zwei Minima auf, wobei die beiden Profilierungen 5 und 7 die gleiche Winkellage der sich verändernden Radien aufweisen.

Weitere Ausführungsformen weisen lediglich eine Laufbahn oder eine Profilierung auf. Bei alternativen Ausführungsformen können auch drei oder mehr Profilierungen oder Laufbahnen für Segmentlagerkörper vorgesehen sein.

Auf den Profilierungen 5 und 7 sind Segmentlagerkörper 15 und 17 gelagert. Auf diesen Segmentlagerkörpern 15 und 17 sind Schwenksegmente 19 gelagert, wobei in der Schnittansicht der Fig. 1 lediglich ein Schwenksegment 19 dargestellt ist. Das Schwenksegment 19 liegt somit auf zwei Reihen umlaufender Segmentlagerkörper 15 und 17 auf.

Das Schwenksegment 19 umfasst einen Wulst auf der radialen äußeren Seite des Schwenksegments 19, welcher in Nuten von zwei Zähnen 25 und 27 eingreift. Die Zähne 25 und 27 sind in ihrer axialen Lage bezüglich der Längsachse 30 des Getriebes 1 zumindest im Wesentlichen mittig über den Segmentlagerkörpern 15 und 17 gelagert, wobei jeweils ein Zahn 25 bzw. 27 über einem Segmentlagerkörper 15 bzw. 17 gelagert ist. Auf diese Weise wird eine durchgängige Kraftübertragung durch das Schwenksegment 19 erreicht. Außerdem werden die als Nadelrollen ausgeführten Segmentlagerkörper 15 und 17 etwa mittig belastet. Weiterhin kann die Baulänge der Segmentlagerkörper 15 und 17 selbst durch diese Maßnahme verringert werden, wobei sich die Laufstabilität erhöhen kann.

Die Kurvenscheibe 3 weist zur Begrenzung der Profilierungen 5 und 7 Borde 32, 34 und 36 auf. Das Bord 34 liegt mittig zwischen den Segmentlagerkörpern 15 und 17, wohingegen die beiden Borde 32 und 36 die Bewegungsfreiheit der Segmentlagerkörper 15 und 17 jeweils in axialer Richtung nach außen beschränken. Das Schwenksegment 19 weist Bordlagerflächen 33 und 37 auf, welche sich jeweils auf den Borden 32 und 36 abstützen können. Auf diese Weise die Laufruhe des Schwenksegments 19 erhöht.

Die Zähne 25 und 27 greifen in eine gemeinsame Verzahnung 40 ein, welche integral mit einem Gehäuse 42 des Getriebes 1 ausgeführt ist.

Die Zähne 25 und 27 sind in radial ausgerichteten Führungen in einem zweiten Zahnträgerteil 44 eines Zahnträgers aufgenommen. Der Zahnträger umfasst außerdem noch ein erstes Zahnträgerteil 45, welches mit dem zweiten Zahnträgerteil 44 durch ein als Schraube ausgeführtes Verbindungsmittel 48 verbunden ist. Über den Umfang des Zahnträgers sind eine Mehrzahl von Verbindungsmitteln 48 vorgesehen, bei der beispielhaften Ausführungsform der Fig. 1 insgesamt sechs Stück.

Bei weiteren Ausführungsformen kann auch eine abweichende Anzahl von Verbindungsmitteln vorgesehen werden, wobei auch eine ungerade Anzahl möglich ist. Die Verbindungsmittel können gleichmäßig über den Umfang des Zahnträgers verteilt werden, es ist hingegen auch möglich, unterschiedliche Winkelabstände vorzusehen, beispielsweise um ein Zusammenfügen der beiden Zahnträgerteile nur in einer bestimmten Winkellage zu ermöglichen. So sind bei der Ausführungsform der Fig. 1 beispielhaft die Winkel zwischen den Verbindungsmitteln nicht gleichmäßig, um einen Wiederzusammenbau der Zahnträgerteile des Zahnträgers nur in einer bestimmten relativen Winkelposition zu einander zuzulassen. Bei weiteren Ausführungsformen können Nuten, Stifte oder andere Konturen vorgesehen sein oder es können Markierungen vorgesehen sein, um eine Wiedermontage nur in einer bestimmten Winkellage zuzulassen oder zu ermöglichen. Auf diese Weise ist eine Bearbeitung des Zahnträgers in einer Aufspannung möglich, wobei anschließend die Zahnträgerteile wieder voneinander gelöst werden, um sie dann im Getriebe wieder mit einander zu verbinden.

Zur Lagerung des Zahnträgers an dem Gehäuse 42 sind Wälzkörper 50 vorgesehen, welche in einem Winkel von 60 zu der Längsachse 30 des Getriebes 1 montiert sind.

Dabei sind die Winkellagen der Wälzkörper 50 spiegelbildlich zu einer axialen Schnittebene des Getriebes 1 zueinander, um eine zuverlässige Lagerung des Zahnträgers in dem Gehäuse 42 zu erreichen. Bei weiteren Ausführungsformen werden auch größere oder kleinere Winkel als 60° verwendet, je nachdem, ob und wie große Axialkräfte aufzunehmen sind.

Die Wälzkörper 50 sind jeweils unmittelbar auf Zahnträgerlagerflächen 54 und 55 des ersten Zahnträgerteils 44 und des zweiten Zahnträgerteils 45 gelagert. Gehäuse-seitig sind die Wälzkörper 50 auf Gehäuselagerflächen 58 des Gehäuses 42 gelagert. Die Wälzkörper 50 rollen also jeweils unmittelbar auf den Zahnträgerlagerflächen 54 und 55 sowie auf den Gehäuselagerflächen 58. Auf diese Weise wird eine kompakte integrale Lagerung erreicht, welche wenig Bauraum beansprucht.

Weiterhin ist bei dem Ausführungsbeispiel der Fig. 1 auch das Abtriebslager als integrales Lager ausgeführt, wobei der Zahnträger bzw. bei der Ausführungsform der Fig. 1 das zweite Zahnträgerteil 44 eine Abtriebslagerfläche 60 aufweist, auf welcher unmittelbar Abtriebslagerwälzkörper 62, welche als Rollen ausgeführt sind, abrollen. Auf der Kurvenscheibe ist eine weitere Abtriebslagerfläche 64 ausgebildet, welche ebenfalls unmittelbar mit den Abtriebslagerwälzkörpern 62 zusammenwirkt. Dadurch rollen die Abtriebslagerwälzkörper unmittelbar auf der Kurvenscheibe 3 ab. Auf diese Weise wird ein integriertes Lager für eine kompakte Bauform geschaffen.

Die Abtriebslagerfläche 60 des zweiten Zahnträgerteils 44 ist Teil eines Abtriebsseitigen Anlaufflansches 66, welcher ein Ausweichen der Schwenksegmente 19 in Abtriebs-seitiger Richtung verhindert. Durch die integrale Ausführung des Anlaufflansches 66 mit dem zweiten Zahnträgerteil 44 wird eine kompakte Bauform und eine hohe Steifigkeit erreicht.

Das erste Zahnträgerteil 45 weist einen weiteren Anlaufflansch 68 auf, welcher ein Ausweichen der Schwenksegmente 19 in die entgegengesetzte Richtung ebenfalls verhindert.

Typischerweise ist gegenüberliegend zu dem Abtrieb, also der Seite des Abtriebslagers gegenüberliegend, ein weiteres Lager für die integral mit einer Antriebswelle ausgebildete Kurvenscheibe 3 vorgesehen. Dies liegt jedoch außerhalb des dargestellten Bereichs der Fig. 1. Antriebs-seitig ist u.U. auch ein größerer Bauraum in radialer Richtung vorhanden, sodass das Antriebs-seitige Lager ggf. als Lager mit separaten Laufflächen ausgeführt sein kann. Bei weiteren Ausführungsformen kann auch das Antriebslager als integrales Lager ausgeführt sein.

## Patentansprüche

1. Getriebe (1), insbesondere Koaxialgetriebe oder Lineargetriebe, mit
- einer Verzahnung (40),
- einem Zahnträger mit radial ausgerichteten Führungen,
- Zähnen (25, 27), welche in den Führungen zum Eingriff mit der Verzahnung aufgenommen sind, wobei die Zähne (25, 27) in den Führungen in Richtung ihrer Längsachse relativ zu dem Zahnträger radial verschieblich gelagert sind,
- einer Kurvenscheibe (3) zum radialen Antrieb der Zähne (25, 27),
- wobei der Zahnträger ein erstes Zahnträgerteil (45) und ein zweites Zahnträgerteil (44) umfasst,
- wobei zwischen einem Gehäuse (42) des Getriebes (1) und dem Zahnträger zumindest ein Lager mit Wälzkörpern (50) angeordnet ist, **dadurch gekennzeichnet, dass** die Wälzkörper (50) unmittelbar auf einer Zahnträgerlagerfläche (54, 55) des Zahnträgers aufliegen.

2. Getriebe (1) nach Anspruch 1, wobei das erste Zahnträgerteil (45) und das zweite Zahnträgerteil (44) durch ein Verbindungsmittel (48) verbunden sind.

3. Getriebe (1) nach Anspruch 1 oder 2, wobei das zweite Zahnträgerteil (44) zumindest zwei in axialer Richtung parallel angeordnete, umlaufende Reihen von Führungen umfasst.

4. Getriebe (1) nach einem der vorhergehenden Ansprüche, wobei die Wälzkörper (50) unmittelbar auf einer Gehäuselagerfläche des Gehäuses (42) aufliegen.

5. Getriebe (1) nach Anspruch 4, wobei die Verzahnung (40) integral mit dem Gehäuse (42) ausgebildet ist.

6. Getriebe (1) nach Anspruch 4 oder 5, wobei die Zahnträgerlagerfläche und/oder die Gehäuselagerfläche und/oder eine Drehachse der Wälzkörper (50) gegenüber der Längsachse des Getriebes einen Winkel von mindestens 10° und/oder höchstens 80° einnehmen.

7. Getriebe (1) nach einem der vorhergehenden Ansprüche, wobei zwischen der Kurvenscheibe (3) und den Zähnen eine Lagerung mit Schwenksegmenten (19) und Segmentlagerkörpern (15,17) vorgesehen ist.

8. Getriebe (1) nach Anspruch 7, wobei der Zahnträger zumindest einen sich radial nach innen oder außen erstreckenden Anlaufflansch (66) umfasst, welcher die Schwenksegmente (19) zumindest teilweise in radialer Richtung übergreift.

9. Getriebe (1) nach einem der vorhergehenden Ansprüche, wobei zumindest eines der Zahnträgerteile (44), insbesondere ein Anlaufflansch (66), eine Abtriebslagerfläche (64) aufweist, welche unmittelbar mit Abtriebslagerwälzkörpern (62) zusammenwirkt.

10. Getriebe (1) nach Anspruch 9, wobei die Abtriebslagerwälzkörper (62) unmittelbar auf der Kurvenscheibe (3) gelagert sind.

11. Getriebe (1) nach einem der vorhergehenden Ansprüche, mit einer Mehrzahl von Schwenksegmenten (19), welche umlaufend auf Segmentlagerkörpern (15, 17) angeordnet sind und jeweils mit einer Wälzlagerfläche auf den Segmentlagerkörpern (15, 17) aufliegen, wobei an den Schwenksegmenten (19) in axialer Richtung beidseitig jeweils eine Bordlagerfläche (33, 37) angeordnet ist.

12. Herstellungsverfahren für ein Getriebe (1) nach einem der vorhergehenden Ansprüche.

13. Herstellungsverfahren für ein Getriebe (1) nach Anspruch 12 mit Verbinden des ersten Zahnträgerteils und des zweiten Zahnträgerteils mittels Verbindungsmitteln .

14. Herstellungsverfahren nach Anspruch 12 oder 13 mit Bearbeiten der Verzahnung und der Gehäuselagerflächen in einer Aufspannung.

15. Herstellungsverfahren nach Anspruch 12, 13 oder 14 mit Bearbeiten der beiden Zahnträgerteile in einer Aufspannung.

## Claims

1. Gear mechanism (1), in particular coaxial gear mechanism or linear gear mechanism, having
- a toothing system (40),
- a tooth carrier with radially oriented guides,
- teeth (25, 27) which are received in the guides for engagement with the toothing system, the teeth (25, 27) being mounted in the guides such that they can be displaced radially relative to the tooth carrier in the direction of their longitudinal axis,
- a cam disk (3) for radially driving the teeth (25, 27),
- the tooth carrier comprising a first tooth carrier part (45) and a second tooth carrier part (44)
- at least one bearing with rolling bodies (50) being arranged between a housing (42) of the gear mechanism (1) and the tooth carrier, **characterized by** the rolling bodies (50) lying directly on a tooth carrier bearing face (54, 55) of the tooth carrier.

2. Gear mechanism (1) according to Claim 1, the first tooth carrier part (45) and the second tooth carrier part (44) being connected by way of a connecting means (48).

3. Gear mechanism (1) according to Claim 1 or 2, the second tooth carrier part (44) comprising at least two circumferential rows of guides, which rows are arranged in parallel in the axial direction.

4. Gear mechanism (1) according to one of the preceding claims, the rolling bodies (50) lying directly on a housing bearing face of the housing (42).

5. Gear mechanism (1) according to Claim 4, the toothing system (40) being configured integrally with the housing (42).

6. Gear mechanism (1) according to Claim 4 or 5, the tooth carrier bearing face and/or the housing bearing face and/or a rotational axis of the rolling bodies (50) assuming an angle of at least 10° and/or at most 80° with respect to the longitudinal axis of the gear mechanism.

7. Gear mechanism (1) according to one of the preceding claims, a bearing with pivoting segments (19) and segment bearing bodies (15,17) being provided between the cam disk (3) and the teeth.

8. Gear mechanism (1) according to Claim 7, the tooth carrier comprising at least one radially inwardly or outwardly extending run-on flange (66) which engages over the pivoting segments (19) at least partially in the radial direction.

9. Gear mechanism (1) according to one of the preceding claims, at least one of the tooth carrier parts (44), in particular a run-on flange (66), having an output bearing face (64) which interacts directly with output bearing rolling bodies (62).

10. Gear mechanism (1) according to Claim 9, the output bearing rolling bodies (62) being mounted directly on the cam disk (3).

11. Gear mechanism (1) according to one of the preceding claims, having a plurality of pivoting segments (19) which are arranged circumferentially on segment bearing bodies (15, 17) and lie in each case with an anti-friction bearing face on the segment bearing bodies (15, 17), in each case one rim bearing face (33, 37) being arranged on both sides in the axial direction on the pivoting segments (19).

12. Production method for a gear mechanism (1) according to one of the preceding claims.

13. Production method for a gear mechanism (1) according to Claim 12 with connection of the first tooth carrier part and the second tooth carrier part by means of connecting means.

14. Production method according to Claim 12 or 13 with machining of the toothing system and the housing bearing faces in one clamping.

15. Production method according to Claim 12, 13 or 14 with machining of the two tooth carrier parts in one clamping.

## Revendications

1. Engrenage (1), en particulier engrenage coaxial ou engrenage linéaire, avec
- une denture (40),
- un porte-dents avec des guides orientés radialement,
- des dents (25, 27) qui sont reçues dans les guides pour venir en prise avec la denture, où les dents (25, 27) sont montées dans les guides dans la direction de leur axe longitudinal de manière à pouvoir se déplacer radialement par rapport au porte-dents,
- un disque à cames (3) destiné à l'entraînement radial des dents (25, 27),
- dans lequel le porte-dents comporte une première partie de porte-dents (45) et une deuxième partie de porte-dents (44),
- dans lequel est disposé, entre un boîtier (42) de l'engrenage (1) et le porte-dents, au moins un roulement avec des éléments roulants (50),
**caractérisé par le fait que** les éléments roulants (50) s'appuient directement sur une surface d'appui du porte-dents (54, 55).

2. Engrenage (1) selon la revendication 1, dans lequel la première partie de porte-dents (45) et la deuxième partie de porte-dents (44) sont connectées par un moyen de connexion (48).

3. Engrenage (1) selon la revendication 1 ou 2, dans lequel la deuxième partie de porte-dents (44) comporte au moins deux rangées de guides périphériques disposés en parallèle dans la directions axiale.

4. Engrenage (1) selon l'une des revendications précédentes, dans lequel les éléments roulants (50) s'appuient directement sur une surface d'appui du boîtier (42).

5. Engrenage (1) selon la revendication 4, dans lequel la denture (40) est réalisée de manière solidaire avec le boîtier (42).

6. Engrenage (1) selon la revendication 4 ou 5, dans lequel la surface d'appui du porte-dents et/ou la surface d'appui du boîtier et/ou un axe de rotation des éléments roulants (50) adopte, par rapport à l'axe longitudinal de l'engrenage, un angle d'au moins 10° et/ou de tout au plus 80°.

7. Engrenage (1) selon l'une des revendications précédentes, dans lequel est prévu, entre le disque à cames (3) et les dents, un palier avec des segments pivotants (19) et des corps porteurs de segment (15, 17).

8. Engrenage (1) selon la revendication 7, dans lequel le porte-dents comporte au moins une bride de contact (66) s'étendant radialement vers l'intérieur ou vers l'extérieur qui vient en prise par-dessus avec les segments pivotants (19) au moins partiellement dans la direction radiale.

9. Engrenage (1) selon l'une des revendications précédentes, dans lequel au moins l'une des parties de porte-dents (44), en particulier une bride de contact (66), présente une surface d'appui de sortie (64) qui coopère directement avec les éléments roulants de roulement de sortie (62).

10. Engrenage (1) selon la revendication 9, dans lequel les éléments roulants du roulement de sortie (62) sont montés directement sur le disque à cames (3).

11. Engrenage (1) selon l'une des revendications précédentes, avec une pluralité de segments pivotants (19) qui sont disposés de manière périphérique sur les corps porteurs de segment (15, 17) et qui se trouvent, chacun, par une surface de roulement sur les corps porteurs de segment (15, 17), sur les segments pivotants (19) étant disposée, de part et d'autre dans la direction axiale, une surface d'appui de plateau (33, 37).

12. Procédé de fabrication d'un engrenage (1) selon l'une des revendications précédentes.

13. Procédé de fabrication d'un engrenage (1) selon la revendication 12, avec le fait de connecter la première partie de porte-dents et la deuxième partie de porte-dents à l'aide de moyens de connexion.

14. Procédé de fabrication selon la revendication 12 ou 13, avec le fait d'usiner la denture et les surfaces d'appui du boîtier en une seule passe.

15. Procédé de fabrication selon la revendication 12, 13 ou 14, avec le fait de traiter les deux parties de porte-dents en une seule passe.
